# EUROPÄISCHE PATENTSCHRIFT

(11) **EP 0 743 595 B1**
(45) Veröffentlichungstag und Bekanntmachung des Hinweises auf die Patenterteilung: **13.10.2004**
(21) Anmeldenummer: 96201281.1
(22) Anmeldetag: 10.05.1996
(51) Int. Cl.: G06F 9/44

(54) **Kommunikationssystem mit Mitteln zum Austausch von Software**
Communication system with means for software exchange
Système de communication avec des moyens pour l'echange de logiciel

(30) Priorität: 18.05.1995 DE 19518266
(43) Veröffentlichungstag der Anmeldung: 20.11.1996
(73) Patentinhaber: Philips Intellectual Property & Standards GmbH, 20099 Hamburg (DE); Koninklijke Philips Electronics N.V., 5621 BA Eindhoven (NL)
(72) Erfinder: Elixmann, Martin, Dr.rer.nat., 52074 Aachen (DE); Günther, Ralf, Dipl.-Inform., 52062 Aachen (DE); Hauptmann, Steffen, Dr.-Ing., 52066 Aachen (DE); Wasel, Josef, Dr.rer.nat., 52074 Aachen (DE)
(74) Vertreter: Volmer, Georg, Dipl.-Ing.

(56) Entgegenhaltungen:
- PROCEEDINGS OF THE INTERNATIONAL SYMPOSIUM ON FAULT TOLERANT COMPUT (FTCS), TOULOUSE, JUNE 22 - 24, 1993, Nr. SYMP. 23, 22.Juni 1993, INSTITUTE OF ELECTRICAL AND ELECTRONICS ENGINEERS, Seiten 30-35, XP000437223 DEEPAK GAUPTA ET AL: "INCREASING SYSTEM AVAILABILITY THROUGH ON-LINE SOFTWARE VERSION CHANGE"
- PROCEEDINGS SECOND INTERNATIONAL WORKSHOP ON CONFIGURABLE DISTRIBUTED SYSTEMS (CAT. NO.94TH0651-0), PROCEEDINGS OF 2ND INTERNATIONAL WORKSHOP ON CONFIGURABLE DISTRIBUTED SYSTEMS, PITTSBURGH, PA, USA, 21-23 MARCH 1994, ISBN 0-8186-5390-6, 1994, LOS ALMITOS, CA, USA, IEEE COMPUT. SOC. PRESS, USA, Seiten 190-201, XP000615780 SCHMIDT D C ET AL: "The Service Configurator framework: an extensible architecture for dynamically configuring concurrent, multi-service network daemons"
- INTERNATIONAL CONFERENCE ON DISTRIBUTED COMPUTING SYSTEMS, ARLINGTON, TEXAS, MAY 20 - 24, 1991, Nr. CONF. 11, 20.Mai 1991, INSTITUTE OF ELECTRICAL AND ELECTRONICS ENGINEERS, Seiten 560-571, XP000221897 PURTILO J M ET AL: "DYNAMIC RECONFIGURATION OF DISTRIBUTED PROGRAMS"

## Beschreibung

Die Erfindung bezieht sich auf ein Kommunikationssystem mit einer Steuerschaltung, welche ein Betriebssystem und Anwendersoftware und Mittel zum Austausch von Software enthält.

Kommunikationssysteme enthalten Computersysteme oder Steuerschaltungen, deren Software langlebig und praktisch dauernd verfügbar sein soll. Bei Fehlern in der Software oder auch aufgrund neuer Anforderungen müssen bestimmte Softwarekomponenten erneuert werden. Dabei sollte die Ausfallzeit des Kommunikationssystems minimiert werden.

Ein Kommunikationssystem, welches paktisch keine Ausfallzeit bei dem Austausch einer Software einer Komponente eines Vermittlungssystem aufweist, ist aus der US-A-5 155 837 bekannt. Vor dem Austausch werden zuerst die Inhalte und Zustände aller Register, Prozesse und Speichereinheiten in einem speziellen Speicher während des Betriebes der alten Software gesichert (Spalte 7, Zeilen 30 bis 36). Die alte Version der Software ist dabei in einer ersten Partition geladen. Die neue Software wird anschließend in eine zweite Partition geladen. Nachdem die neue Software geladen und getestet worden ist, werden aus dem Speicher die Inhalte und Zustände aller Register, Prozesse und Speichereinheiten auf die neue Software übertragen. Diese wird dann in Betrieb genommen. Die neue Software beginnt dabei jedoch nicht an dem Prozeßpunkt zu arbeiten, an dem die alte Software angehalten worden ist, sondern an einem definierten Programmpunkt. Es werden auch nicht einzelne Softwaremodule oder -komponenten, sondern eine in sich geschlossene Software ausgetauscht.

Der Erfindung liegt daher die Aufgabe zugrunde, Softwarekomponenten auszutauschen, bei welcher außer einer kurzen Verzögerung keine Einschränkung des Betriebes erfolgt.

Die Aufgabe wird erfindungsgemäß durch die Merkmale des Anspruchs 1 gelöst.

Die Erfindung ermöglicht den Neustart der neuen Softwarekomponente an dem Programmpunkt, an dem die alte Softwarekomponente angehalten worden ist. Außerdem werden alle Zustände der alten Softwarekomponente zur neuen Softwarekomponente übertragen. Dies kann aber nur für solche Systeme gelten, die ein Betriebssystem aufweisen, welches den Austausch von Nachrichten zwischen Softwarekomponenten ermöglicht. Hierbei werden Nachrichten über Softwareschnittstellen, die im folgenden als Ports bezeichnet werden, zwischen verschiedenen Prozessen ausgetauscht. Erfindungsgemäß werden also in der alten Softwarekomponente alle Zustände und alle an einem Dienst-Port anliegenden Nachrichten eingesammelt und zur neuen Softwarekomponente übertragen. Über einen Dienst-Port empfängt die Softwarekomponente alle Nachrichten von anderen Prozessen. Die neue Softwarekomponente übernimmt die neuen Zustände, führt gegebenenfalls eine Zustandstransformation durch und startet die neue Software in dem Programmpunkt der neuen Softwarekomponente, der dem der alten Softwarekomponente entspricht.

Der Austausch einer Softwarekomponente erfolgt dabei so, daß keine andere Softwarekomponente davon berührt wird. Die von einer anderen Softwarekomponente eintreffenden Nachrichten werden nämlich auf die neue Softwarekomponente übertragen und nach dem Austausch weiterverarbeitet. Der Autausch erfolgt dabei so, daß nur eine kurze Verzögerung bei der Bearbeitung entsteht. Praktische Untersuchungen haben ergeben, daß die Verzögerungszeit im Bereich weniger Millisekunden liegt.

Ein Kommunikationssystem kann ein Computersystem sein, eine Vermittlungsstelle, ein Computernetzwerk oder auch Serversysteme, wie z.B. ein Vide-On-Demand-Server. Ein Computerssystem enthält wenigstens einen Computer, in dem eine Softwarekomponente ausgetauscht werden soll.

Eine Softwarekomponente oder ein Prozeß enthält genau einen Thread. Ein Thread ist ein in sich selbst sequentiell ablaufendes Programmstück. Der Thread weist einen ersten Teil zur Übernahme und geeigneten Umsetzung der Zustände und Nachrichten des Dienst-Ports einer alten Softwarekomponente und einen zweiten Teil zum Einsammeln der Zustände des Prozesses und der Nachrichten des Dienst-Ports auf.

Der Austausch einer Softwarekomponente wird von einem Austauschmanager gesteuert, welcher zum Laden und Starten einer Softwarekomponente vorgesehen ist. Die neue Softwarekomponente kann dabei von einer Wartungsvorrichtung an den Austauschmanager geliefert worden sein, an der auch neue Softwarekomponenten entwickelt werden können. Als Übertragungsmedium kann beispielsweise das Telefonnetz dienen.

Ausführungsbeispiele der Erfindung werden nachstehend anhand der Figuren näher erläutert. Es zeigen:
- Fig. 1: ein Computersystem mit einer Wartungsvorrichtung und einem Computer, der austauschbare Softwarekomponenten enthält,
- Fig. 2: den Nachrichtenfluß zwischen dem Austauschmanager, einer neuen und alten Softwarekomponente,
- Fig. 3: ein Vermittlungssystem mit einer Wartungsvorrichtung und einer Steuerschaltung, die austauschbare Softwarekomponenten enthält,
- Fig. 4: ein Zustandsdiagramm einer nicht austauschbaren Softwarekomponente und
- Fig. 5: ein Zustandsdiagramm einer austauschbaren Softwarekomponente.

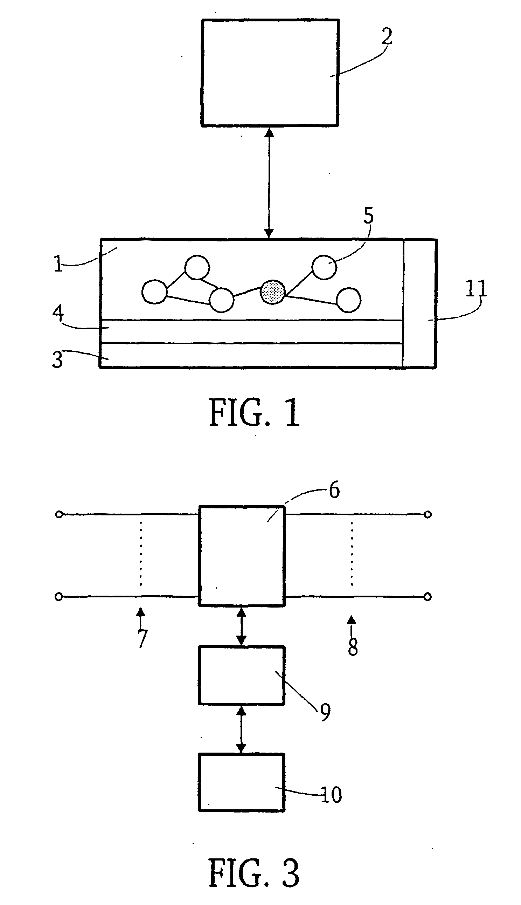

In Fig. 1 ist ein Computersystem mit einem Computer 1 und einer Wartungsvorrichtung 2 dargestellt. Der Computer enthält Hardwarekomponenten 3, ein Betriebssystem 4, Anwendersoftware 5 und einen Austauschmanager 11. Das Betriebssystem 4 muß eine Kommunikation zwischen Softwarekomponenten der Anwendersoftware 5 über Nachrichten ermöglichen (z.B. nachrichtenorientiertes Betriebssystem (message based operating system)). Die Nachrichten oder Daten werden dabei über Softwareschnittstellen ausgetauscht. Im folgenden wird eine Softwareschnittstellen als Port bezeichnet.

Der Austauschmanager 11 ist eine Softwareprogramm, mit dessen Hilfe Komponenten der Anwendersoftware 5 ausgetauscht werden können. In der Fig. 1 sind die einzelnen Softwarekomponenten durch Kreise dargestellt. Die Verbindungen zwischen den Kreisen sollen Nachrichtenflüsse zwischen den Softwarekomponenten andeuten.

Die Wartungsvorrichtungvorrichtung 2 könnte ein entfernt liegender Computer sein, von dem aus eine neue Softwarekomponente geliefert wird. Hierbei ist es denkbar, daß die neue Softwarekomponente an diesem Computer entwickelt und getestet wird. Zur Übertragung der neuen Softwarekomponente können bekannte Übertragungsmedien und Protokolle verwendet werden. Beispielsweise ist eine Übertragung über ein Telefonnetz möglich. Die neue Softwarekomponente könnte aber auch direkt in den Computer 1 geladen werden (z.B. mit Hilfe einer lokalen Wartungsvorrichtung (Laptop)).

Der Austauschmanager 11 lädt die neue Softwarekomponente in den Computer 1 und startet sie dort. Die neue Komponente meldet sich bei dem Austauschmanager 11 an und bekommt mitgeteilt, ob sie eine existierende alte Komponente ersetzen soll. Falls das der Fall ist, sendet die neue Komponente, die eine Nachfolgerkomponente darstellt, einen Austauschbefehl (request) an die alte Komponente, die eine Vorgängerkomponente darstellt. Die Vorgängerkomponente sammelt ihre Zustandsinformationen und überträgt diesen Zustand zur Nachfolgerkomponente. Außerdem meldet die Vorgängerkomponente dem Austauschmanager 11, daß sie gestoppt hat. Danach setzt die Nachfolgerkomponente die Arbeit exakt an der Stelle fort, an der die Vorgängerkomponente gestoppt wurde. Damit dieser Austausch, ohne daß der Computer außer Betrieb genommen wird, durchgeführt werden kann, sind in den Komponenten der Anwendersoftware noch bestimmte Veränderungen gegenüber nicht austauschbaren Komponenten vorgenommen worden.

Wie oben erwähnt müssen die Softwarekomponenten, welche austauschbar sein sollen, gegenüber konventionellen Softwarekomponenten Erweiterungen besitzen. Eine Softwarekomponente weist genau einen Thread auf, der einen Dienst-Port für den Empfang von Nachrichten (messages) von einem Klienten und einen Teil zur Antwort auf die Nachrichten an einen Klienten aufweist. Ein Thread ist ein in sich selbst sequentiell ablaufendes Programmstück. Ein Klient ist eine andere Softwarekomponente (Prozeß). Damit eine Softwarekomponente austauschbar wird, muß sie einen Austausch-Punkt bzw. Restart-Punkt im Thread aufweisen. In der Regel sind der Austausch-Punkt und der Restart-Punkt identisch.

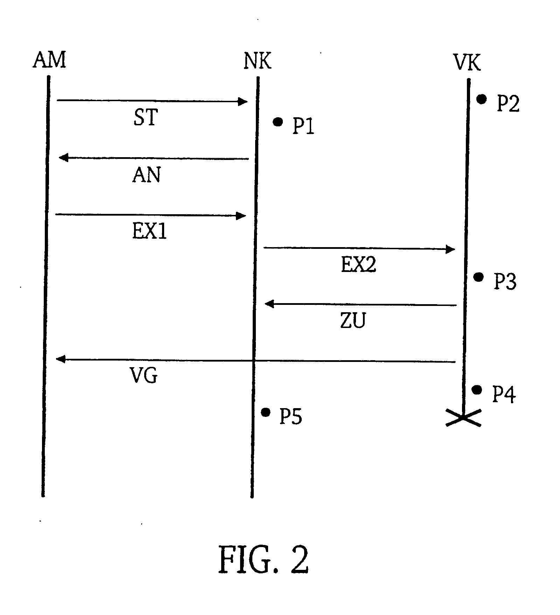

In Fig. 2 ist schematisch der Nachrichtenfluß zwischen dem Austauschmanager 11 (hier als AM bezeichnet), der Vorgängerkomponente VK und der Nachfolgerkomponente NK dargestellt. Nachdem die neue Komponente NK vom Austauschmanager gestartet worden ist (Pfeil ST), werden von dieser bestimmte Informationen geholt (Punkt P1). Die Vorgängerkomponente VK ermöglicht am Punkt P2 die Erfüllung ihrer Aufgaben, d.h. z.B. die Bearbeitung externer, anliegender Nachrichten. Die Nachfolgerkomponente NK meldet sich dann beim Austauschmanager 11 (AM) an (Pfeil AN), der anschließend der Nachfolgerkomponente NK den Befehl zum Austausch der Komponenten gibt (Pfeil EX1). Dieser Befehl wird von der Nachfolgerkomponente NK weiter an die Vorgängerkomponente VK gegeben (Pfeil EX2). Daraufhin sammelt die Vorgängerkomponente VK ihren Zustand (Punkt P3) und liefert diesen an die Nachfolgerkomponente NK (Pfeil ZU). Die Nachfolgerkomponente NK rekonstruiert aus den empfangenen Zuständen die Objekte und führt gegebenfalls eine Zustandstransformation durch. Alle Nachrichten die während des Austauschvorgangs für einen Dienst-Port der Vorgängerkomponente VK bestimmt waren, werden dadurch zum Dienst-Port der Nachfolgerkomponente NK gegeben. Anschließend meldet die Vorgängerkomponente VK dem Austauschmanager 11 (AM), daß sie gestoppt hat (Pfeil VG) und löscht sich (Punkt P4). Die neue Komponente NK übernimmt danach die Bearbeitung der externe Nachrichten (Punkt P5).

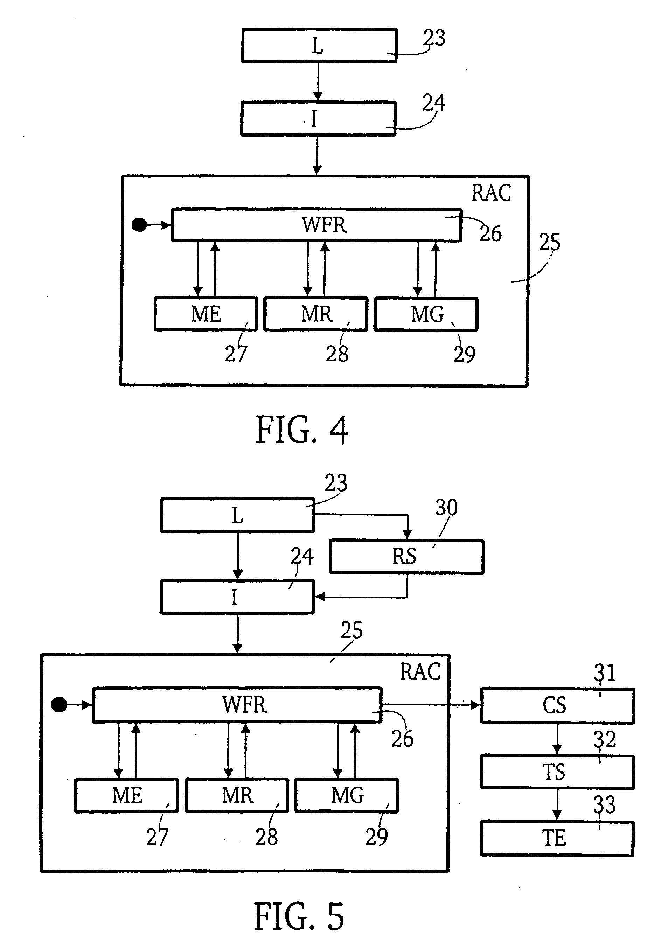

Der Computer 1 könnte beispielsweise auch ein Server in einem Computernetzwerk sein. Eine weitere Anwendungsmöglichkeit besteht für Systeme, welche zur Übertragung von Nachrichten vorgesehen sind. Ein Beispiel ist ein Vermittlungssystem, deren wesentliche Blöcke in Fig. 3 gezeigt sind. Das Vermittlungssystem enthält ein Koppelfeld 6 welches auf Eingangsleitungen 7 empfangene Signale an eine oder mehrere Ausgangsleitungen 8 weitergibt. Zur Steuerung des Koppelfeldes dient eine Steuerschaltung 9, die außer den notwendigen Hardwarebestandteilen ein Betriebssystem, Anwendersoftware und einen Austauschmanager enthält. Zum Austausch von Komponenten der Anwendersoftware ist eine Wartungsvorrichtung 10 vorgesehen, die mit der Steuerschaltung 9 auf dieselbe Weise wie die Wartungsvorrichtung 2 mit dem Computer 1 zusammenarbeitet.

Anhand eines in der Programmiersprache C++ geschriebenen Prozesses soll im folgenden etwas detaillierter der Aufbau einer austauschbaren Softwarekomponente erläutert werden. Zuerst wird der konventionelle Aufbau des Prozesses ohne die für den Austausch notwendigen, erfindungsgemäßen Maßnahmen beschrieben. Der Prozeß ermöglicht mittels Spracheingaben ein Telefonbuch zu verwalten. Der Telefonbuch-Prozeß stellt anderen Prozessen drei Methoden zur Verfügung. Das ist erstens das Hinzufügen eines Eintrages zum Telefonbuch, zweitens das Löschen eines Eintrages aus dem Telefonbuch und drittens das Ermitteln eines Eintrages aus vorgegebenen Sprachdaten. Ein Prozeß liefert dazu dem Telefonbuch-Prozeß eine Nachricht, aus der die entsprechende gewünschte Methode herausgefunden wird. Die Implementation des Telefonbuch-Prozesses ist im folgenden aufgeführt:

| | | |
|---|---|---|
| (1) | #include "audiodat.hxx" | // Klasse 'AudioData' zur Sprach-Repräsentation |
| | #include "bin.hxx" | // Nachrichten-Puffer-Klasse 'Bin' |
| | #include "port.hxx" | // Port-Klasse 'Port' |
| | #include "s.hxx" | // String-Klasse 'S' |
| | #include "thread.hxx" | // Thread-Klasse 'Thread' |

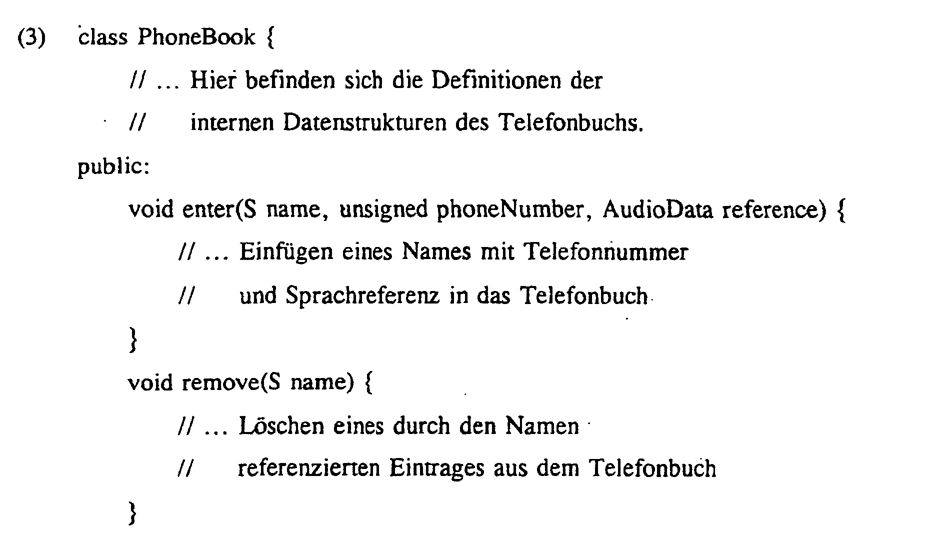

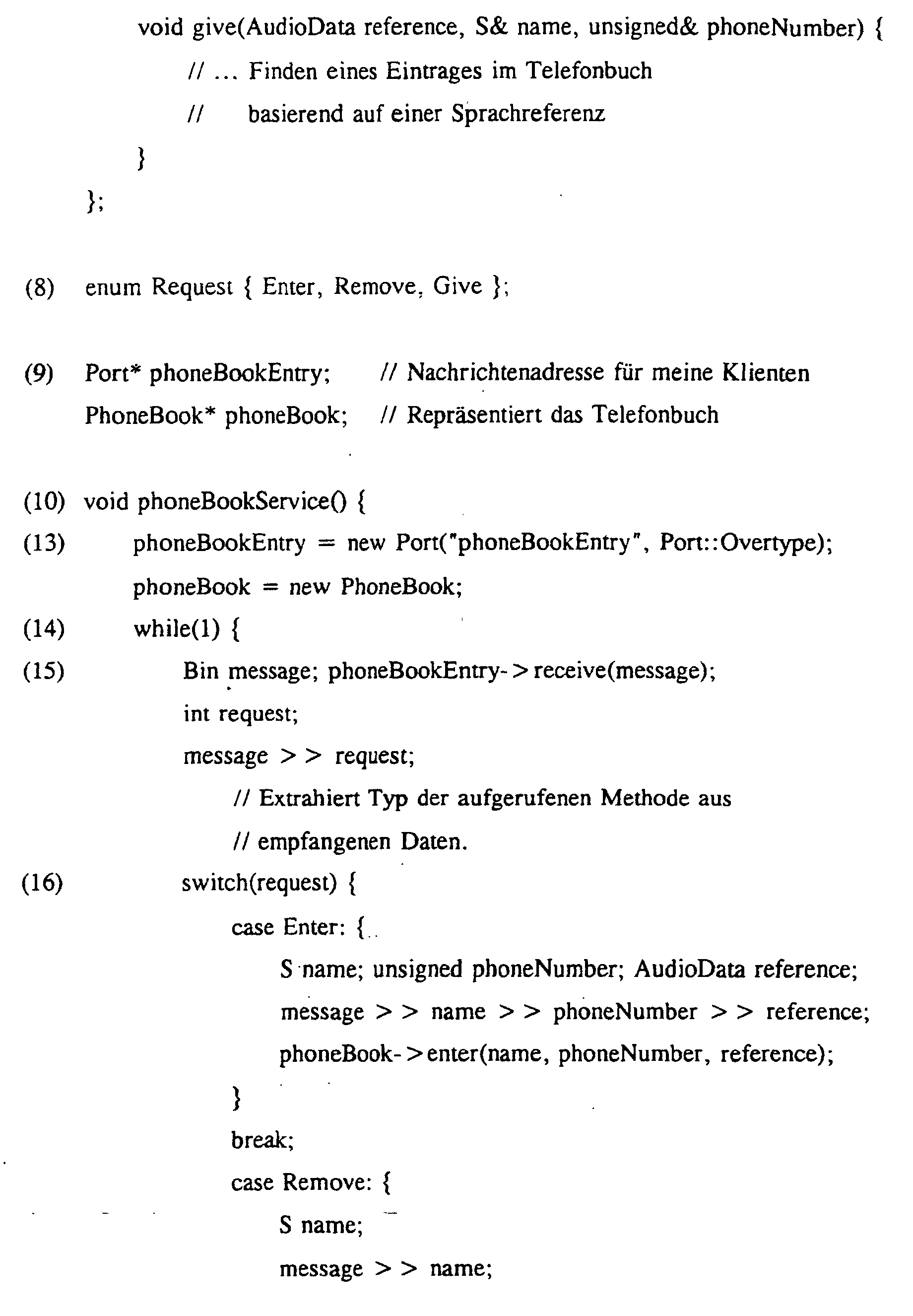

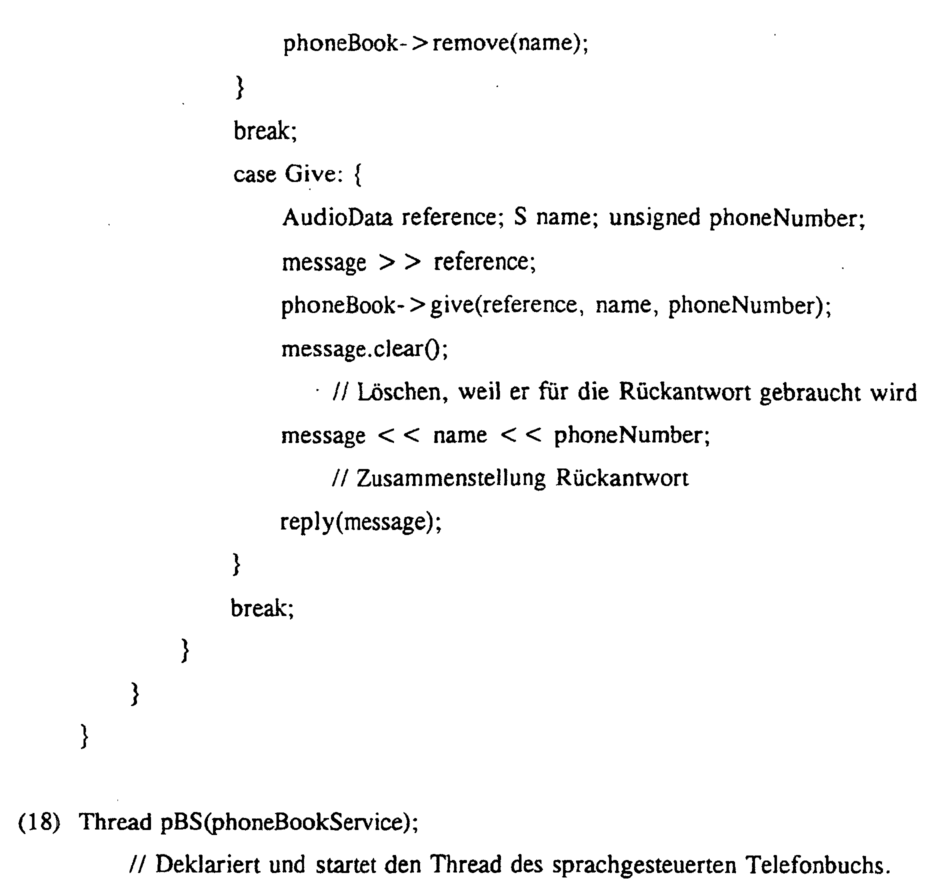

Bei der oben dargestellten Implementation sind nur die Deklarationen aufgeführt, welche zum Verständnis des Telefonbuch-Prozesses erforderlich sind. Das Programm enthält zur Bezugnahme Abschnittsnummern, welche nicht Bestandteil des Programmtextes sind. Einzelne Programmabschnitte werden jeweils durch vorangestellte, in Klammern angegebene Zahlen gekennzeichnet.

In den Abscnitten (1) und (3) sind Importe und Deklarationen von Klassen von Objekten enthalten, die im Telefonbuch-Prozeß verwendet werden. In dem Abschnitt (1) werden einige Bibliotheken (Headerdateien) in den Prozeß eingebunden, die verschiedene weitere Klassen zur Verfügung stellen. Die jeweilige Bedeutung der einzelnen Bibliotheken ist in den Kommentarzeilen erläutert.

Abschnitt (3) zeigt die Definition einer internen Telefonbuch-Klasse "PhoneBook". Die Implementationen für "Enter", "Remove" und "Give" sind nicht im einzelnen aufgeführt. Die Methode "Enter" erlaubt das Einfügen eines Namens mit Telefonnummer und Sprachreferenz (Sprachprobe) in das Telefonbuch, die Methode "Remove" erlaubt das Löschen eines durch den Namen referenzierten Eintrages aus dem Telefonbuch und die Methode "Give" ermöglicht das Finden eines Eintrages im Telefonbuch der auf einer Sprachreferenz basiert. In diesem Fall sucht jemand also Einträge unter einen Namen, den er sprachlich vorgibt. Die Methoden "Enter", "Remove" und "Give" erhalten und übergeben jeweils die in den Klammern zu den jeweiligen Methoden angegebenen Parameter.

In Abschnitt (8) sind die Methoden aufgeführt, die der Telefonbuch-Prozeß anderen Prozessen zur Verfügung stellt. In Abschnitt (9) ist der Port (Dienst-Port) definiert, über den die Methodenaufrufe von anderen Prozessen an das Telefonbuch erfolgen. Ein Port dient zur Versendung von Nachrichten an andere Prozesse. In Abschnitt (9) wird auch das Telefonbuch-Objekt "PhoneBook" deklariert, das ebenso wie die vorherige Port-Deklaration den Zustand des Softwareobjektes bildet. Das Objekt "PhoneBook" verwaltet alle relevanten Daten des Telefonbuchs.

In den Abschnitt (10) bis (16) wird die Hauptfunktion des Telefonbuch-Prozesses angegeben. Diese Funktion wird als Thread ausgeführt. Der Thread besteht aus einen Intialsierungsteil im Abschnitt (13) und einer Endlosschleife (ab Abschnitt (14)), in der Methodenaufrufe empfangen werden (Abschnitt (15)) und in der die Methodenaufrufe ausgeführt werden (Abschnitt (16)). Im Initialisierungsteil im Abschnitt (13) wird der Anfangszustand des Softwareobjektes gesetzt. In der Schleife, die mit Abschnitt (14) beginnt, wird auf eine Anforderung gewartet. Falls eine Nachricht von dem Dienst-Port empfangen worden ist (Abschnitt (15)) wird diese im Puffer "message" abgelegt. Die Nachricht enthält immer zuerst den Typ der aufgerufenen Methode und je nach Methode noch zusätzliche Parameter. In Abhängigkeit vom Typ (Request) wird entweder zur Methode "Enter", zur Methode "Remove" oder zur Methode "Give" gesprungen. Die Methode "Enter" fügt in das Telefonbuch-Objekt "phoneBook" den Namen, die Telefonnummer und eine Sprachreferenz ein. Die Methode "Remove" entfernt aus dem Telefonbuch-Objekt "phoneBook" den Namen mit den entsprechenden Eintragungen. Für die Methode "Give" wird z.B. noch eine Sprachreferenz übermittelt, die in eine Variable "reference" vom Typ "AudioData" abgelegt wird. Über einen Aufruf der Methode "Give" des internen Objekts "phoneBook" werden dazu ein Nutzername "name" und eine Telefonnummer "phoneNumber" ermittelt und mittels des Befehls "reply" an den Klienten gesendet, der nach der entsprechenden Telefonnummer gefragt hat. In Abschnitt (18) ist eine Deklaration aufgeführt, durch die der Thread instantiiert, mit der die Funktion "phoneBookService" verbunden und gestartet wird. Die Funktion "phoneBookService" beginnt ab Abschnitt (10).

Der Ablauf des Threads kann durch das in der Fig. 4 dargestellte Zustandsdiagramm noch weiter veranschaulicht werden. Block 23 bezeichnet den Zustand (Zustand L, loaded), in den das gesamte Softwareobjekt von dem Austauschmanager 11 in den Arbeitsspeicher des Computers 1 oder der Steuerschaltung 9 geladen wurde. Nach der Initialisierung tritt der Thread in einen Initialisierungszustand (Zustand I, initialized), was der Block 24 angibt. Der nächste Zustand RAC (running application code) zeigt die eigentliche Ausführung des Threads (Block 25) und wird im Programm durch die Abschnitte (14) bis (16) beschrieben. Der Zustand RAC weist weitere Unterzustände WFR (Block 26, waiting for requests), ME (Block 27, processing "enter"), MR (Block 28, processing "remove") und MG (Block 29, processing "give") auf. Der Pfeil mit dem Punkt auf der linken Seite des Blockes 26 kennzeichnet den Unterzustand, der eingenommen wird, wenn das Programm in den übergeordneten Zustand eintritt. Im konkreten Beispiel heißt das, daß der Zustand RAC immer mit dem Unterzustand WFR beginnt. Im Zustand WFR wird auf Nachrichten gewartet. Nach Eintreffen einer Nachricht wird in einen der Zustände ME, MR oder MG gesprungen. Diese Zustände korrespondieren mit der Ausführung der Methoden "Enter", "Remove" und "Give". Nach Beenden einer der Methoden wird in den Zustand WFR zurückgesprungen.

Um den Austausch einer Softwarekomponente durchzuführen, ist der oben dargestellte Telefonbuch-Prozeß durch weitere Deklarationen zu erweitern. Diese zusätzlichen Abschnitte und die schon oben beschriebenen Abschnitte des Telefonbuch-Prozesses sind im folgenden aufgeführt:

| | | |
|---|---|---|
| (1) | #include "audiodat.hxx" | // Klasse 'AudioData' zur Sprach-Repräsentation |
| | #include "bin.hxx" | // Nachrichten-Puffer-Klasse 'Bin' |
| | #include "port.hxx" | // Port-Klasse 'Port' |
| | #include "s.hxx" | // String-Klasse 'S' |
| | #include "thread.hxx" | // Thread-Klasse 'Thread' |
| (2) | #include "exchange.hxx" | // Definiert 'getExcInfo' und 'setExcInfo' |

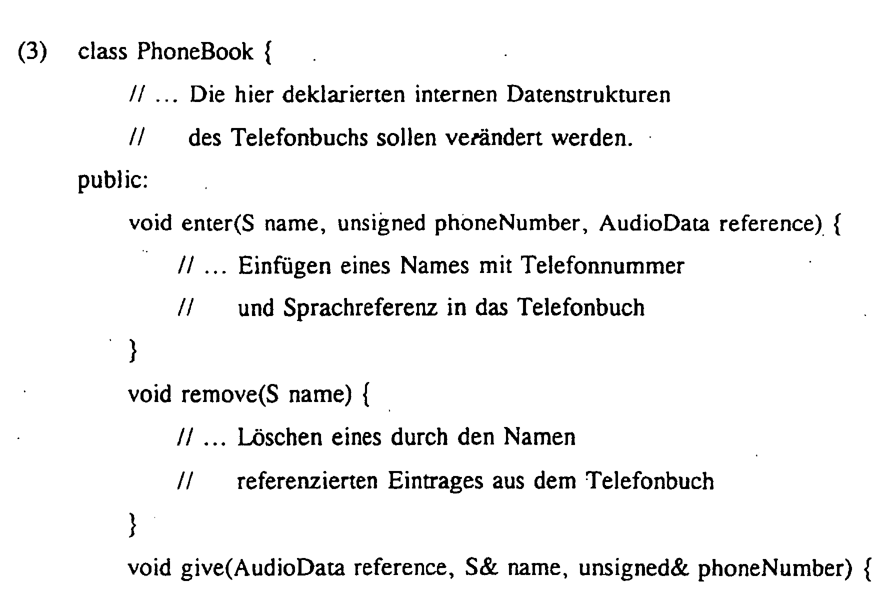

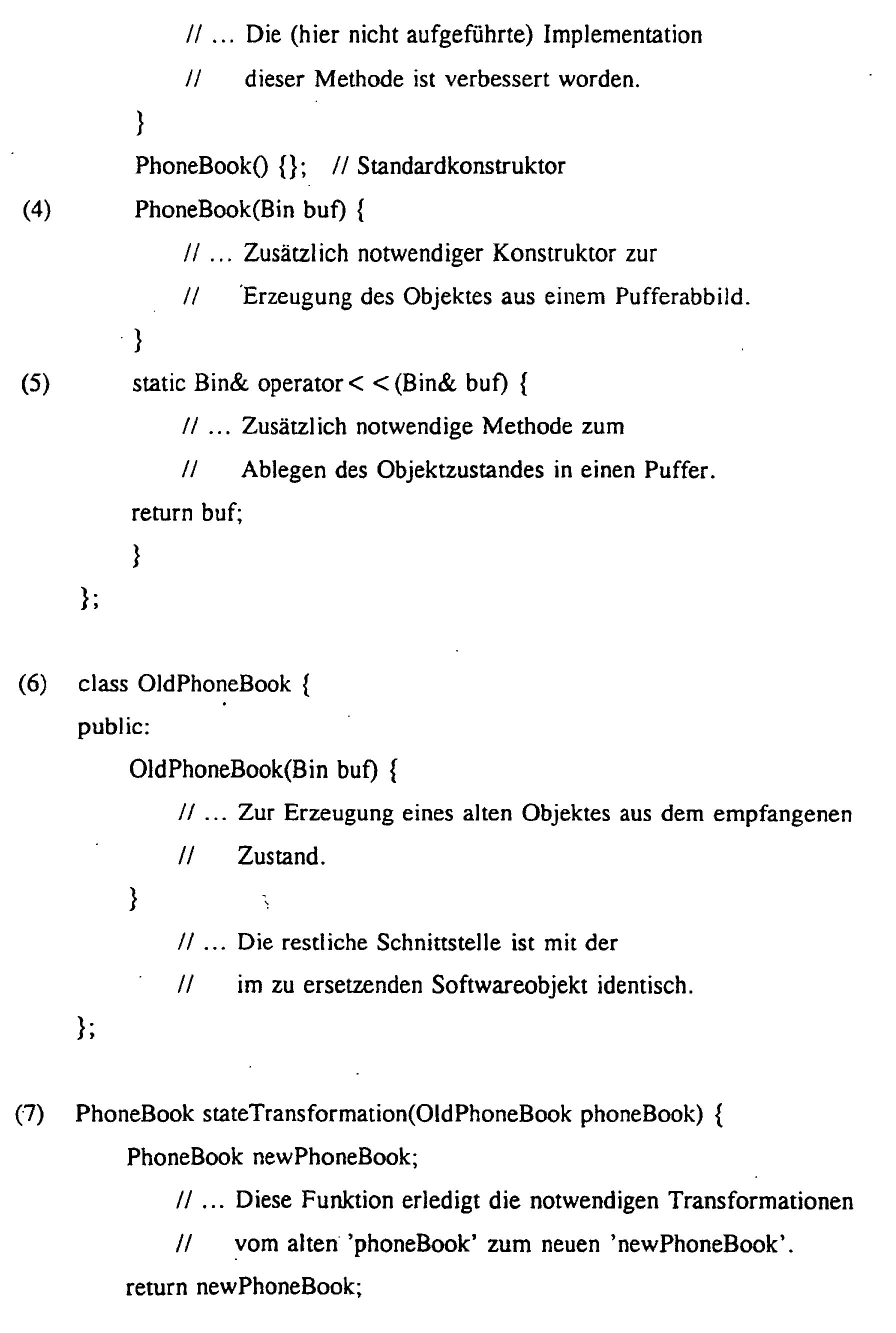

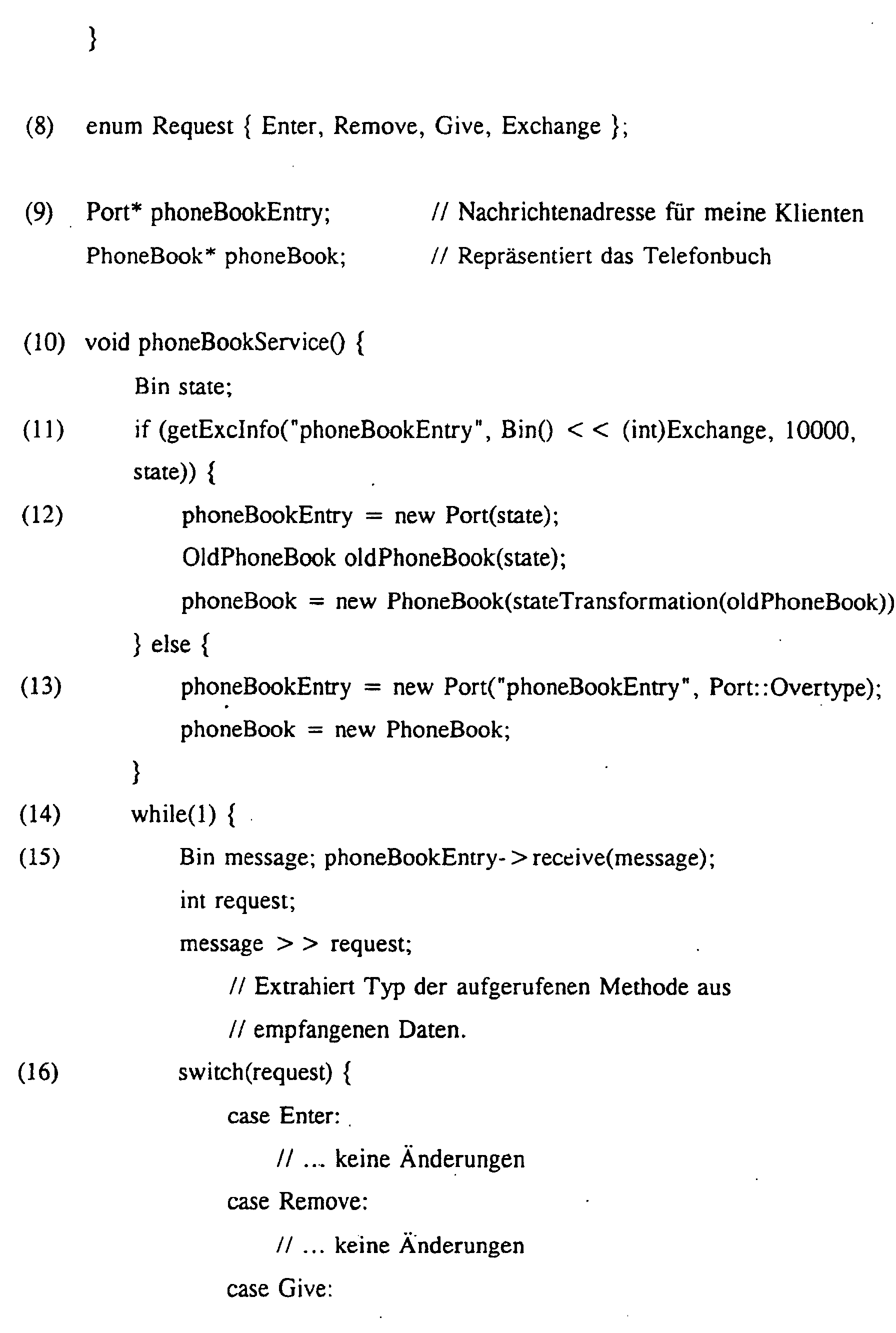

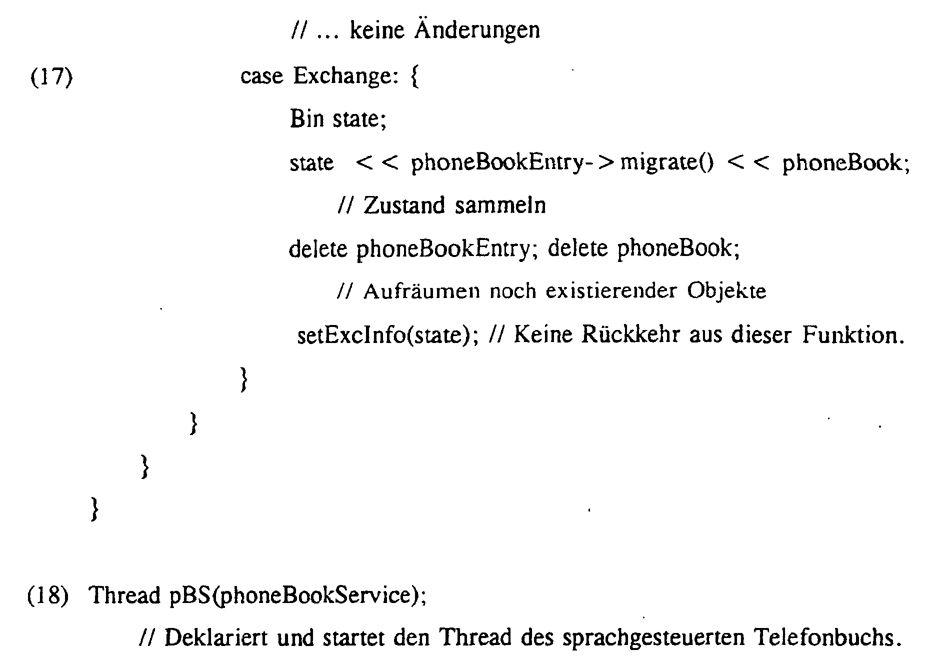

Der oben gezeigte Programmablauf ist für den Fall vorgesehen, daß diese Softwarekomponente eine andere (Vorgängerkomponente) ersetzen soll, und für den anderen Fall, daß diese Softwarekomponente durch eine andere neue Softwarekomponente (Nachfolgerkomponente) ersetzt wird. Die Softwarekomponente, welche die erfindungsgemäßen Maßnahmen enthält, verwendet ein zusätzliches Modul "exchange.hxx" (Abschnitt (2)), das zwei Methoden "getExcInfo" und "setExcInfo" zur Verfügung stellt. Die Methode "getExcInfo" stellt die Zustandsinformationen der zu ersetzenden Komponente der neuen Komponente zur Verfügung. Demgegenüber übergibt die Methode "setExcInfo" Zustandsinformationen der aktuellen Komponente an eine sie ersetzende neue Komponente. Jeder Thread ruft also zu Beginn seiner Abarbeitung genau einmal die Methode "getExcInfo" und beendet seine Abarbeitung mit "setExclnfo" (vgl. die unten aufgeführten Programmabläufe).

Die Deklarationen im Abschnitt (3) werden um zusätzliche Methodenaufrufe erweitert, die in den auf den Abschnitt (3) folgenden Abschnitten (4) und (5) aufgeführt sind. Prinzipiell werden alle internen Objekte, soweit noch nicht vorhanden, um zwei weitere Methoden erweitert. Eine Methode ist erforderlich, um den neuen Zustand des Objektes der Nachfolgerkomponente aus dem Zustand eines ähnlichen Objektes der Vorgängerkomponente zu konstruieren (Abschnitt (4)) und eine weitere Methode, um den Zustand der Vorgängerkomponente in eine als Nachricht versendbare Form zu verpacken (Abschnitt (5)). Es wird der Methodenaufruf "PhoneBook (Bin buf)" verwendet, der ein Objekt aus einem Pufferabbild konstruiert (Abschnitt (4)). Dieser Methodenaufruf wird benötigt, wenn die beschriebene Softwarekomponente den Zustand ihres internen Objektes "phoneBook" aus dem übertragenen Zustand vom "phoneBook" der Vorgängerkomponente gewinnt. Zusätzlich wird in Abschnitt (5) eine Methode aufgerufen, die das Ablegen des Objektzustandes in einen Puffer erlaubt. Diese Methode ist erforderlich, wenn die hier beschriebene Softwarekomponente (Vorgängerkomponente) den Zustand ihres internen Objektes "phoneBook" an eine Nachfolgerkomponente übertragen möchte.

Prinzipiell ist es zulässig, daß die internen Objekte einer Nachfolgerkomponente nicht identisch mit den internen Objekten der zu ersetzenden Komponente (Vorgängerkomponente) sind. In dem Ausführungsbeispiel soll das für das interne Objekt "phoneBook" der Fall sein. Gelöst wird diese Inkompatibilität durch die Bereitstellung einer Transferfunktion "stateTransformation" (Abschnitt (7)). Diese Funktion muß in der Lage sein, den alten Typ "OldPhoneBook" (Abschnitt (6)) des internen Objektes "phoneBook" in seine neue Repräsentation umzuwandeln. Das erfolgt unmittelbar, nachdem der Zustand der alten Objekte empfangen wurde (siehe Abschnitt (12)).

Der Abschnitt (8) gibt einen vom Objekt bereitgestellten weiteren Dienst an. Dieser Dienst "exchange" ermöglicht den Austausch der Softwarekomponente.

Der Thread des Telefonbuchprozesses enthält zwei zusätzliche Programmteile. Einer ist für die Übernahme der Zustände von einer Vorgängerkomponente und der andere Teile für die Übergabe der Zustände an eine Nachfolgerkomponente verantwortlich. Ob eine Vorgängerkomponente existiert wird mittels der Methode "getExcInfo" (siehe unten) ermittelt. Existiert eine solche, dann übermittelt "getExcInfo" auch den Zustand der Vorgängerkomponente. Dieser wird zur Rekonstruktion der internen Objekte "phoneBookEntry" und "phoneBook" benutzt (Abschnitt (12)). Existiert keine Vorgängerkomponente, dann wird die Komponente ganz normal gestartet (Abschnitt (13)). Das Erzeugen des neuen Dienst-Ports wird mit den Anweisungen in den Abschnitten (12) und (13) realisiert. Alle noch nicht abgearbeiteten Nachrichten des Dienst-Ports der alten Softwarekomponente sind Bestandteil von diesem Zustand und werden übergeben. Weiter wird im Abschnitt (12) der alte Zustand des Telefonbuches aus dem Puffer "state" extrahiert und in der Variablen "oldPhoneBook" abgelegt. Die oben beschriebene Zustandstransferfunktion, die den Zustand eines alten Telefonbuches in den Zustand eines neuen Telefonbuches abbildet, wird in Abschnitt (12) angewendet. Ein solcher Transfer ist beispielsweise erforderlich, wenn ein neues Feld "Postleitzahlen" hinzukommt oder dieses Feld einen anderen Typ erhält (z.B. 5 anstatt 4 Zeichen).

Der zweite neue Programmteil (Abschnitt (17)) realisiert den für den Austausch der Komponente gegen eine Nachfolgerkomponente notwendigen Dienst "Exchange". Zuerst wird in Abschnitt (17) der augenblickliche Zustand der alten Softwarekomponente (Vorgängerkomponente) in einem Puffer "state" abgelegt. Es werden z.B. der Zustand einschließlich der Nachrichten des Dienst-Ports "phoneBookEntry" in dem Puffer "state" gespeichert. Der in dem Puffer "state" abgelegte Zustand der alten Softwarekomponente wird mittels "setExcInfo" an die neu einzusetzende Softwarekomponente (Nachfolgerkomponente) gesendet. Die Methode "setExclnfo" bricht gleichzeitig die Softwarekomponente ab.

Der Ablauf des Threads in der Softwarekomponente mit den erfindungsgemäßen Maßnahmen kann ebenfalls durch ein Zustandsdiagramm beschrieben werden, welches in der Fig. 5 gezeigt ist. Alle Zustände, die mit denen in der Fig. 4 identisch sind, weisen dieselben Bezeichnungen auf. Der Zustand RS (Block 30, receiving state) gibt den Zustand nach einem Neustart der Softwarekomponente an, bei der auf die Übertragung des Zustandes der alten Komponente gewartet wird. Erhält die Softwarekomponente am Ende ihrer Lebensdauer dann selbst ein Austauschsignal, wechselt sie in den Zustand CS (Block 31, collecting state). In diesem Zustand sammelt sie die Zustände ihrer internen Objekte. Der Zustand TS (Block 32, transferring state) gibt die Übertragung der Zustände von der alten auf die neue Softwarekomponente an. Das Beenden einer alten Softwarekomponente wird durch den Zustand TE (Block 33, terminated) angegeben.

Das Modul "exchange.hxx", welches die Methoden "getExcInfo" und "setExcInfo" definiert, wird im folgenden aufgelistet:
(1) #ifndef FLYER_EXCHANGE
   #define FLYER_EXCHANGE
(2) #include "bin.hxx"
(3) int getExcInfo(const char* portName, const Bin& excReqCode, int maxState, Bin& state);
(4) void setExcInfo(const Bin& state);
   #endif

In Abschnitt (1) wird ein Symbol "FLYER_EXCHANGE" getestet und, falls es nicht definiert ist, gesetzt. Das verhindert das mehrfache Inkludieren (Einfügen) dieses Moduls. Abschnitt (2) inkludiert die Definition der Klasse "bin". Die Methode "getExcInfo", welche die Zustandinformationen für die Nachfolgerkomponente liefert, wird in Abschnitt (3) definiert. Die Methode besitzt die Parameter "portName", "excReqCode", "maxState", "state" und "return". "portName" gibt den Namen des Ports an, über den die Leistungen dieser Softwarekomponente in Anspruch genommen werden. "excReqCode" ist ein Anforderungskode, der zur Einleitung des Austauschvorganges an die alte, zu ersetzende Softwarekomponente gesendet werden soll. Die maximale Größe des erwarteten Zustandes in Byte gibt "maxState" an. In "state" wird der zu übertragende Zustand des Threads abgelegt. Der Rückkehrwert der Funktion "getExcInfo" ist gleich 0 (FALSE), falls kein Austausch stattfinden soll, d.h. falls die Komponente einfach nur neu gestartet werden soll.

In Abschnitt (4) wird die Methode definiert, welche die Zustandsinformationen des alten Threads der Vorgängerkomponente, die in "state" abgelegt sind, an die Nachfolgerkomponente überbringt. Die Funktion "setExcInfo" kehrt nicht zurück. Der aufrufende Thread wird gelöscht.

Das Modul "exchange.cxx", dessen Programmablauf unten dargestelt ist, beinhaltet die Implementierung der in dem Modul "exchange.hxx" beschriebenen Schnittstelle:
(1) #include "exchange.hxx" // Eigene Schnittstellenbeschreibung
   #include "excstub_.hxx" // Schnittstelle zum Austausch-Manager 'ExcStub'
   #include "port.hxx" // Definiert 'Port'
   #include "thread.hxx" // Definiert 'mySelf'
(2) const int False = 0, True = !0;
(3) static ExcStub excStub; // Schnittstelle zum Austausch-Manager
(4) static S servicePortName; // nur für internen Namenstransfer 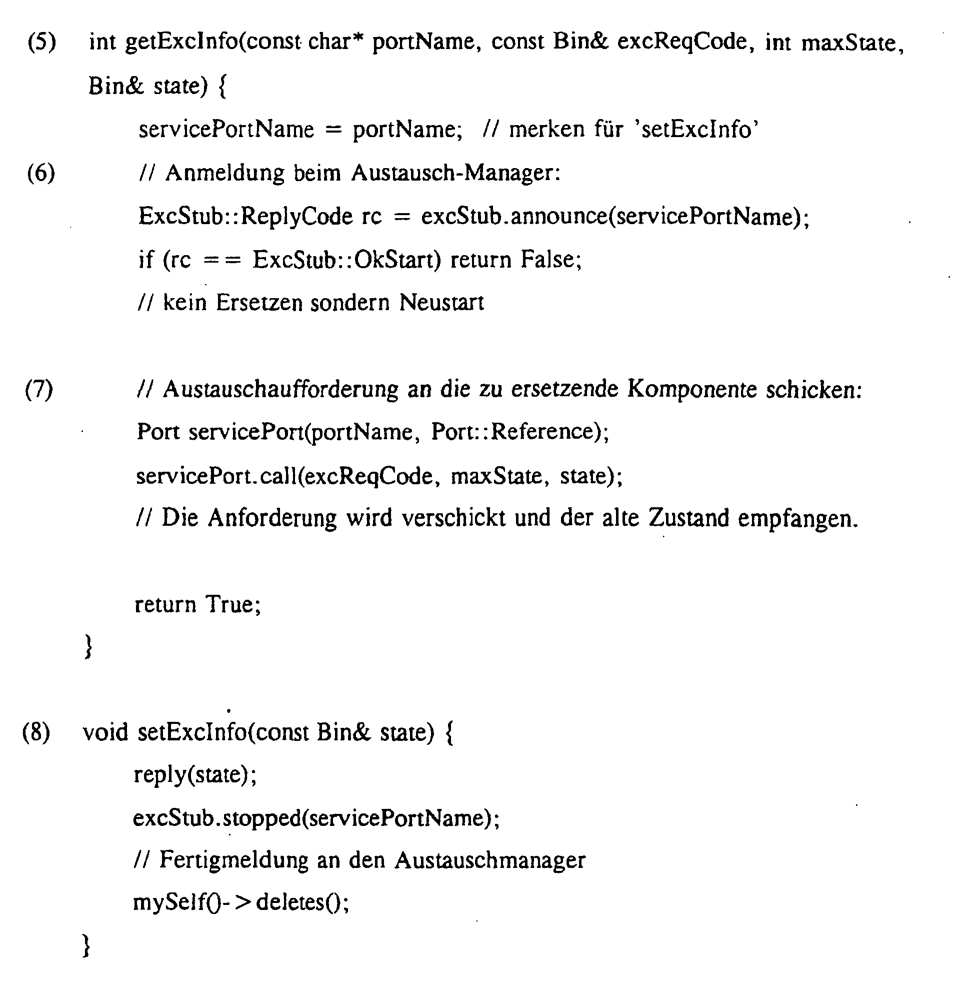
   Abschnitt (1) enthält Importe bzw. Deklarationen verwendeter Klassen. So stellt z.B. "excstub_.hxx" eine Schnittstelle zum Austauschmanager 11 zur Verfügung. Abschnitt (2) definiert die Konstanten "False" und "True".

Abschnitt (3) deklariert ein Objekt "excStub", über das der Austauschmanager 11 angesprochen wird. Abschnitt (4) deklariert ein String-Objekt, das lediglich zum Informationstransfer (Namenstransfer) zwischen "getExcInfo" und "setExcInfo" benutzt wird.

Im Abschnitt (5) beginnt die Implementation der Methode "getExclnfo". Im Abschnitt (6) meldet sich die Softwarekomponente beim Austauschmanager 11 an und erfährt, ob sie neu gestartet wird oder ob sie eine existierende Komponente (Vorgängerkomponente) ersetzen soll.

Soll eine Vorgängerkomponente ersetzt werden, so wird im Abschnitt (7) ein Referenz-Port geschaffen, der den Dienst-Port der zu ersetzenden Komponente referenziert. Der Vorgängerkomponente wird nun ein Austauschbefehl mittels "servicePort.call" gesendet. Sie schickt daraufhin ihren Zustand zurück, der in "state" abgespeichert und als Parameter "state" von "getExcInfo" übergeben wird.

Abschnitt (8) enthält die Implementierung von "setExcInfo". Dabei wird zuerst der eingesammelte Zustand "state" an den Sender des Austauschbefehls zurückgeschickt ("reply(state)"). Dann wird der Austauschmanager 11 informiert, daß die Softwarekomponente (Vorgängerkomponente) gestoppt hat ("excStub.stopped(servicePortName)") und die Softwarekomponente löscht sich selbst.

## Patentansprüche

1. Vermittlungssystem mit einem Koppelfeld (6), welches auf Eingangsleitungen (7) empfangene Signale an eine oder mehrere Ausgangsleitungen (8) weitergibt, und mit einer zur Steuerung des Koppelfeldes (6) vorgesehenen Steuerschaltung (9), welche ein Betriebssystem (4), Anwendersoftware (5) und einen Austauschmanager (11) zum Austausch von Softwarekomponenten der Anwendersoftware (5) enthält,
**dadurch gekennzeichnet,**
**daß** das Betriebssystem (4) eine Kommunikation zwischen Softwarekomponenten der Anwendersoftware über Nachrichten ermöglicht,
**daß** Nachrichten über Softwareschnittstellen, Ports genannt, ausgetauscht und über Dienst-Ports Nachrichten mit einem Klienten ausgetauscht werden,
**daß** jede austauschbare Softwarekomponente einen Thread aufweist, der einen ersten Teil zur Übernahme und geeigneten Umsetzung der übertragenen Zustände und Nachrichten des Dienst-Ports einer Vorgängerkomponente (VK) und einen zweiten Teil zum Einsammeln aller Zustände und aller an einem Dienst-Port anliegenden Nachrichten enthält, wobei der Thread einen Austausch-Punkt bzw. Restart-Punkt aufweist,
**daß** der Austauschmanager (11) zum Laden und Starten einer neuen Softwarekomponente auch Nachfolgerkomponente (NK) genannt, vorgesehen ist,
**daß** der Austauschmanager dazu vorgesehen ist, der Nachfolgerkomponente (NK) einen Austauschbefehl (EX1) zu senden, der von der Nachfolgerkomponente (NK) an die Vorgängerkomponente (VK) weitergegeben wird (EX2),
**daß** die Vorgängerkomponente (VK), die von dem Austauschmanager (11) einen Austauschbefehl (EX2) erhalten hat, dazu vorgesehen ist, alle Zustände (Punkt P3) und anliegenden Nachrichten einzusammeln und diese Zustände und Nachrichten an den Dienst-Port der Nachfolgerkomponente zu übertragen, um anschließend an den Austauschmanager zu melden (VG), daß sie gestoppt hat,
**daß** die Vorgängerkomponente (VK) dazu vorgesehen ist, sich zu löschen (Punkt P4) und daß die Nachfolgerkomponente (NK) dazu vorgesehen ist, danach die Bearbeitung der Nachrichten zu übernehmen (Punkt P5).

2. Kommunikationssystem nach Anspruch 1
dadurch gekenntzeichnet,
daß eine Wartungsvorrichtung (2, 10) zur Lieferung einer neuen Softwarekomponente über ein Übertragungsmedium an den Austauschmanager (11) vorgesehen ist.

3. Kommunikationssystem nach Anspruch 1 oder 2,
**dadurch gekennzeichnet,**
**daß** bei einer veränderten Struktur der Nachfolgerkomponente zur Vorgängerkomponente die Nachfolgerkomponente zur Durchführung einer Zustandstransformation vorgesehen ist.

4. Computersystem mit wenigstens einem Computer (1), welcher ein Betriebssystem (4), Anwendersoftware (5) und einen Austauschmanager (11) zum Austausch von Softwarekomponenten der Anwendersoftware (5) enthält,
**dadurch gekennzeichnet,**
**daß** das Betriebssystem (4) eine Kommunikation zwischen Softwarekomponenten der Anwendersoftware über Nachrichten ermöglicht,
**daß** Nachrichten über Softwareschnittstellen, Ports genannt, ausgetauscht und über Dienst-Ports Nachrichten mit einem Klienten ausgetauscht werden,
**daß** jede austauschbare Softwarekomponente einen Thread aufweist, der einen ersten Teil zur Übernahme und geeigneten Umsetzung der übertragenen Zustände und Nachrichten des Dienst-Ports einer Vorgängerkomponente (VK) und einen zweiten Teil zum Einsammeln aller Zustände und aller an einem Dienst-Port anliegenden Nachrichten enthält, wobei der Thread einen Austausch-Punkt bzw. Restart-Punkt aufweist,
**daß** der Austauschmanager (11) zum Laden und Starten einer neuen Softwarekomponente, auch Nachfolgerkomponente (NK) genannt, vorgesehen ist,
**daß** der Austauschmanager dazu vorgesehen ist, der Nachfolgerkomponente (NK) einen Austauschbefehl (EX1) zu senden, der von der Nachfolgerkomponente (NK) an die Vorgängerkomponente (VK) weitergegeben wird (EX2),
**daß** die Vorgängerkomponente (VK), die von dem Austauschmanager (11) einen Austauschbefehl (EX2) erhalten hat, dazu vorgesehen ist, alle Zustände (Punkt P3) und anliegenden Nachrichten einzusammeln und diese Zustände und Nachrichten an den Dienst-Port der Nachfolgerkomponente zu übertragen, um anschließend an den Austauschmanager zu melden (VG), daß sie gestoppt hat,
**daß** die Vorgängerkomponente (VK) dazu vorgesehen ist, sich zu löschen (Punkt P4) und daß die Nachfolgerkomponente (NK) dazu vorgesehen ist, danach die Bearbeitung der Nachrichten zu übernehmen (Punkt P5).

## Claims

1. A communication system comprising a switching matrix (6) which transfers signals received on input lines (7) to one or more output lines (8), and comprising a control circuit (9) provided for controlling the switching matrix (6), the control circuit (9) comprising an operating system (4), user software (5) and an exchange manager (11) for exchanging software components of the user software (5), **characterized**
**in that** the operating system (4) makes a communication possible between software components of the user software via messages,
**in that** messages are exchanged via software interfaces called ports and messages are exchanged with a client via service ports,
**in that** each exchangeable software component comprises a thread which contains a first part for taking over and suitably converting the transmitted states and messages of the service port of a predecessor component (VK) and a second part for collecting all states and all messages available at a service port, while the thread has an exchange point or restart point respectively,
**in that** the exchange manager (11) is provided for loading and starting a new software component also called successor component (NK),
**in that** the exchange manager is provided for sending an exchange command (EX1) to the successor component (NK) which command is transferred (EX2) from the successor component (NK) to the predecessor component (VK),
**in that** the predecessor component (VK), which has received an exchange command (EX2) from the exchange manager (11) is provided for collecting all states (point P3) and available messages and transmit these states and messages to the service port of the successor component in order to announce (VG) to the exchange manager that it has stopped,
**in that** the predecessor component (VK) is provided for deleting itself (point P4) and in that the successor component (MK) is provided for subsequently taking over the processing of the messages (point P5).

2. A communication system as claimed in claim 1, **characterized in that** a warning device (2, 10) for delivering a new software component via a transmission medium to the exchange manager (11) is provided.

3. A communication system as claimed in claim 1 or 2, **characterized in that** if there is a change of structure in the successor component relative to the predecessor component, the successor component carries out a state transformation.

4. A computer system comprising at least a computer (1) which includes an operating system (4), user software (5) and an exchange manager (11) for exchanging software components of the user software (5), **characterized**
**in that** the operating system (4) makes a communication possible between software components of the user software via messages,
**in that** messages are exchanged via software interfaces called ports and messages are exchanged with a client via service ports,
**in that** each exchangeable software component comprises a thread which contains a first part for taking over and suitably converting the transmitted states and messages of the service port of a predecessor component (VK) and a second part for collecting all states and all messages available at a service port, while the third has an exchange point or restart point respectively,
**in that** the exchange manager (11) is provided for loading and starting a new software component also called successor component (NK),
**in that** the exchange manager is provided for sending an exchange command (EX1) to the successor component (NK) which is transferred (EX2) from the successor component (NK) to the predecessor component (VK),
**in that** the predecessor component (VK), which has received an exchange command (EX20 from the exchange manager (11) is provided for collecting all states (point P3) and available messages and transmit these states and messages to the service port of the successor component in order to announce (VG) to the exchange manager that it has stopped,
**in that** the predecessor component (VK) is provided for deleting itself (point P4) and in that the successor component (MK) is provided for subsequently taking over (point P5) the processing of the messages.

## Revendications

1. Système de transmission avec un champ de couplage (6) qui transmet les signaux reçus sur des lignes d'entrée (7) à une ou plusieurs lignes de sortie (8) et avec un circuit de commande (9) pour la commande du champ de couplage (6) qui contient un système d'exploitation (4), un logiciel d'application (5) et un gestionnaire de remplacement (11) pour le remplacement de composants logiciels du logiciel d'application (5),
**caractérisé en ce**
**que** le système d'exploitation (4) permet une communication entre des composants logiciels du logiciel d'application par l'intermédiaire de messages,
**que** des messages sont échangés par l'intermédiaire d'interfaces logicielles, appelées ports, et des messages sont échangés avec un client par l'intermédiaire de ports de service,
**que** chaque composant logiciel remplaçable présente un thread qui comprend une première partie pour la reprise et la transformation adéquate des états et messages transmis du port de service d'un composant précédent (VK) et une deuxième partie pour la collecte de tous les états et de tous les messages appliqués à un port de service, le thread présentent un point d'échange ou de redémarrage,
**que** le gestionnaire de remplacement (11) est prévu pour le chargement et le démarrage d'un nouveau composant logiciel, aussi appelé composant successeur (NK),
**que** le gestionnaire de remplacement est prévu pour transmettre au composant successeur (NK) un ordre de remplacement (EX1) qui est transmis par le composant successeur (NK) au composant précédent (VK) (EX2),
**que** le composant précédent (VK) qui a reçu un ordre de remplacement (EX2) du gestionnaire de remplacement (11) est prévu pour collecter tous les états (point P3) et les messages appliqués et transmettre ces états et messages au port de service du composant successeur afin de signaler ensuite au gestionnaire de remplacement (VG) qu'il s'est arrêté, que le composant précédent (VK) est prévu pour s'effacer (point P4) et
**que** le composant successeur (NK) est prévu pour reprendre ensuite le traitement des messages (point P5).

2. Système de communication selon la revendication 1,
**caractérisé en ce**
**qu'**un dispositif de maintenance (2, 10) est prévu pour la délivrance d'un nouveau composant logiciel au gestionnaire de remplacement (11) par l'intermédiaire d'un support de transmission.

3. Système de communication selon la revendication 1 ou 2,
**caractérisé en ce**
**que** le composant successeur est prévu pour l'exécution d'une transformation d'état en cas de changement de structure du composant successeur par rapport au composant précédent.

4. Système informatique avec au moins un ordinateur (1) qui contient un système d'exploitation (4), un logiciel d'application (5) et un gestionnaire de remplacement (11) pour le remplacement de composants logiciels du logiciel d'application (5),
**caractérisé en ce**
**que** le système d'exploitation (4) permet une communication entre des composants logiciels du logiciel d'application par l'intermédiaire de messages,
**que** les messages sont échangés par l'intermédiaire d'interfaces logicielles, appelées ports, et que des messages sont échangés avec un client par l'intermédiaire de ports de service,
**que** chaque composant logiciel remplaçable présente un thread qui comprend une première partie pour la reprise et la transformation adéquate des états et messages transmis du port de service d'un composant précédent (VK) et une deuxième partie pour la collecte de tous les états et de tous les messages appliqués à un port de service, le thread présentant un point d'échange ou de redémarrage,
**que** le gestionnaire de remplacement (11) est prévu pour le chargement et le démarrage d'un nouveau composant logiciel, aussi appelé composant successeur (NK),
**que** le gestionnaire de remplacement est prévu pour transmettre au composant successeur (NK) un ordre de remplacement (EX1) qui est transmis par le composant successeur (NK) au composant précédent (VK) (EX2),
**que** le composant précédent (VK) qui a reçu un ordre de remplacement (EX2) du gestionnaire de remplacement (11) est prévu pour collecter tous les états (point P3) et les messages appliqués et transmettre ces états et messages au port de service du composant successeur afin de signaler ensuite au gestionnaire de remplacement (VG) qu'il s'est arrêté, que le composant précédent (VK) est prévu pour s'effacer (point P4) et
**que** le composant successeur (NK) est prévu pour reprendre ensuite le traitement des messages (point P5).
